# EUROPEAN PATENT SPECIFICATION

(11) **EP 3 422 597 B1**
(45) Date of publication and mention of the grant of the patent: **11.08.2021**
(21) Application number: 18174240.4
(22) Date of filing: 25.05.2018
(51) Int. Cl.: H04B 7/15, H04B 7/155, H04B 7/26

(54) **METHOD OF EXTENDING RF SIGNALS IN A WIRELESS CONTROL SYSTEM**
VERFAHREN ZUR ERWEITERUNG VON HF-SIGNALEN IN EINEM DRAHTLOSKOMMUNIKATIONSSYSTEM
PROCÉDÉ D'EXTENSION DE SIGNAUX RF DANS UN SYSTÈME DE COMMANDE SANS FIL

(30) Priority: 27.06.2017 TW 106121435
(43) Date of publication of application: 02.01.2019
(73) Proprietor: Grand Mate Co., Ltd., Taichung City 401 (TW)
(72) Inventor: HUANG, Chung-Chin, 401 Taichung City (TW); HUANG, Chin-Ying, 401 Taichung City (TW); HUANG, Hsin-Ming, 401 Taichung City (TW); HUANG, Hsing-Hsiung, 401 Taichung City (TW); YEH, Yen-Jen, 412 Taichung City (TW); LAI, Chiang-Wen, 402 Taichung City (TW)
(74) Representative: Viering, Jentschura & Partner mbB Patent- und Rechtsanwälte

(56) References cited:
- EP-A2- 1 441 472
- US-A1- 2015 043 421
- US-B1- 9 641 248

## Description

### BACKGROUND OF THE INVENTION

### 1. Technical Field

The present invention relates generally to a wireless control system, and more particularly to a method of extending RF signals in a wireless control system.

### 2. Description of Related Art

A wireless control system uses 433MHz or 315MHz RF (radio frequency) signals to transmit control commands and to report operational status. A conventional wireless control system includes a first electronic device and a second electronic device, each of which has an RF signal coverage area, and is located with the RF signal coverage area of each other. The electronic devices transmit data back and forth with RF signals, and said data is the data of control commands or data of operational status. For example, the first electronic device is a control device, and the second electronic device is a controlled device; the first electronic device transmits RF signals carrying the data of control commands to the second electronic device, and the second electronic device operates accordingly based on the control commands. On the other hand, the second electronic device reports the RF signals carrying the data of operational status to the first electronic device. Whereby, the system can have the capacity of controlling and status reporting. US 2015/043421 A1 method of extending RF signals in a wireless control system, wherein the wireless control system includes a first electronic device, a second electronic device, and an RF signal extender; the first electronic device has a first RF signal coverage area, the method of extending RF signals is applied to the RF signal extender, comprising the steps of: A. receiving an RF signal with the RF signal extender; B. analyzing the received RF signal with the RF signal extender to retrieve a piece of data carried in the received RF signal; and C. determining whether the retrieved piece of data follows an RF communication protocol of the wireless control system; and transmitting the another RF signal. US 9 641 248 B1 and EP 1 441 472 A2 describe further known designs.

However, the RF signal coverage area of each of the electronic devices is limited. If one of the electronic devices leaves the RF signal coverage area of the other one, the control commands and data of operational status would not be able to be transmitted. In other words, the operable area of the wireless control system is limited by this fact.

### BRIEF SUMMARY OF THE INVENTION

In view of the above, the objective of the present invention is to provide a method of extending RF signals in a wireless control system, which could expand the total RF signal coverage area of the wireless control system.

Another objective of the present invention is to provide another method of extending RF signals in a wireless control system, which could reduce the interferences caused by RF signals of other wireless control systems. The present invention provides a method of extending RF signals in a wireless control system, wherein the wireless control system includes a first electronic device, a second electronic device, and an RF signal extender. The first electronic device has a first RF signal coverage area, and the second electronic device has a second RF signal coverage area, wherein the second electronic device is located out of the first RF signal coverage area. The first RF signal coverage area partially overlaps the second RF signal coverage area, and the RF signal extender is located in an overlapping area between the first RF signal coverage area and the second RF signal coverage area. The RF signal extender has a third RF signal coverage area, and the first electronic device and the second electronic device are both located in the third RF signal coverage area. The method of extending RF signals is applied to the RF signal extender, including the follow steps: A. receiving an RF signal with the RF extender; B. analyzing the received RF signal with the RF extender to retrieve a piece of data carried in the received RF signal; and C. determining whether the retrieved piece of data follows an RF communication protocol of the wireless control system with the RF extender; if so, compiling the retrieved piece of data into another RF signal, and transmitting the another RF signal with the RF extender. Step C further comprises the following steps to compile the retrieved piece of data into the another RF signal:
C1. keeping the retrieved piece of data in a data register temporarily with the RF signal extender; and
C2. checking if there are more RF signals still being received with the RF signal extender;
if no, compiling the retrieved piece of data kept in the data register into the another RF signal with the RF signal extender and transmitting the another RF signal with the RF signal extender; if yes, analyzing every one of the more received RF signals to retrieve a piece of data carried therein with the RF signal extender; and when the retrieved piece of data is considered to follow the RF communication protocol, going back to the step C1.

By providing the RF signal extender between the first electronic device and the second electronic device, the total RF signal coverage area of the wireless control system could be extended, and the RF signals send by the RF signal extender would be ensured to follow the RF communication protocol in the wireless control system, which could reduce the interferences from the RF signals of other wireless control systems.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a structural diagram of a wireless control system using the method of extending RF signals of a first embodiment of the present invention;
FIG. 2 is a flowchart of the method of extending RF signals of the above embodiment; and
FIG. 3 is a flowchart of the method of extending RF signals of a second embodiment.

### DETAILED DESCRIPTION OF THE INVENTION

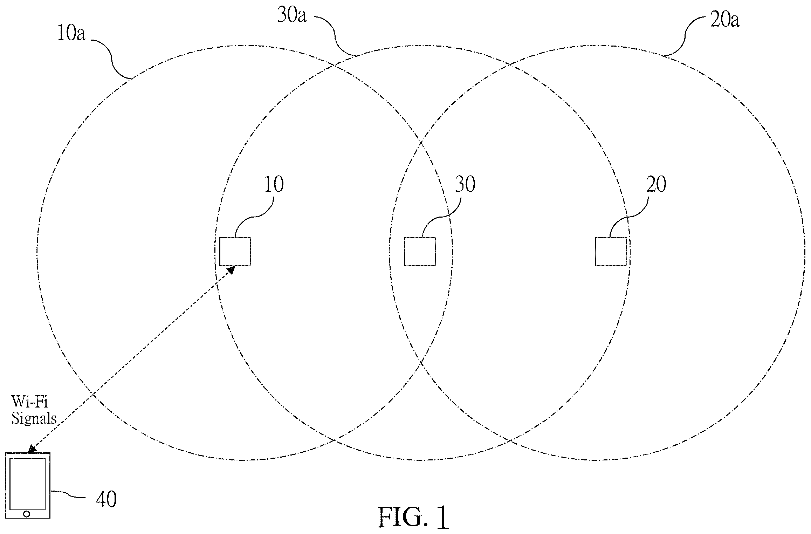

A wireless control system is shown in FIG. 1, which is adapted to be applied with a method of extending RF signals of a first embodiment of the present invention, and includes a first electronic device 10, a second electronic device 20, and an RF signal extender 30, wherein the first electronic device 10 is a signal converter as an example, which could bi-directionally convert Wi-Fi signals into and from RF signals. The first electronic device 10 communicates with a portable device 40 with Wi-Fi signals, whereby to receive the piece of data sent from the portable device 40 and to transmit piece of data to the portable device 40. A working frequency of the aforementioned RF signals is 433MHz or 315MHz, and the first electronic device 10 has a first RF signal coverage area 10a.

The second electronic device 20 is a home appliance as an example, which could receive RF signals carrying data of control commands, and transmit RF signals with data of operational status. The second electronic device 20 is located out of the first RF signal coverage area 10a, and has a second RF signal coverage area 20a, which partially overlaps with the first RF signal coverage area 10a.

The RF signal extender 30 is located at the overlapping area between the first RF signal coverage area 10a and the second RF signal coverage area 20a, and the RF signal extender 30 has an RF transceiver module (not shown), which is adapted to transmit and receive RF signals. The RF signal extender 30 has a third RF signal coverage area 30a, and the first electronic device 10 and the second electronic device 20 are both located in the third RF signal coverage area 30a.

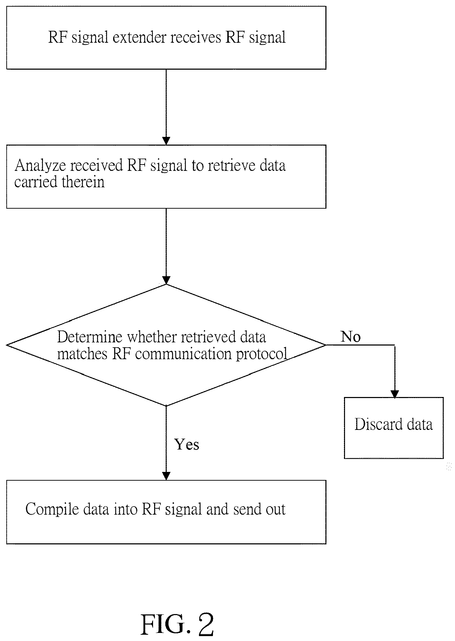

The method of extending RF signals of the current embodiment is executed by the RF signal extender 30, including the following steps shown in FIG. 2:

The RF signal extender 30 receives an RF signal with the RF transceiver module, and the RF signal mentioned herein may be sent out by the first electronic device 10 or the second electronic device 20, and may be also sent out by a device of another wireless control system.

The RF signal extender 30 analyzes the received RF signal to retrieve a piece of data carried in the received RF signal.

The RF signal extender 30 determines whether the retrieved piece of data follows an RF communication protocol of the wireless control system or not.

If so, the received RF signal is considered to be sent out by one of the devices belong to the wireless control system. The retrieved piece of data is then compiled into another RF signal and sent out through the RF transceiver module.

If not, the received RF signal is considered to be sent out by a device of another wireless control system. Therefore, the retrieved piece of data will be discarded, and will not be compiled into the another RF signal.

In the current embodiment, the steps of determining whether the retrieved piece of data is in line with the RF communication protocol is performed by checking a header and a trailer in the retrieved piece of data; if the header and the trailer match a predetermined header and a predetermined trailer defined by the RF communication protocol, the retrieved piece of data would be considered to follow the RF communication protocol.

In practice, in addition to checking the header and the trailer, a length of the retrieved piece of data can be also checked. If the length matches a predetermined length defined by the RF communication protocol, the retrieved piece of data would be considered to follow the RF communication protocol. The aforementioned checking methods (i.e., checking the header and the trailer, and checking the length of the data) could be both applied, or only one of them is applied.

In the current embodiment, the method of extending RF signals further includes the step of counting times a retrieved piece of data is discarded in a period of time, and generating a warning message once the times the retrieved piece of data is discarded reach a predetermined count. For example, if 100 retrieved pieces of data are uninterruptedly discarded in 10 minutes, then generate the warning message to alert the user that the RF signals transmitted by the first electronic device 10 or the second electronic device 20 might go wrong. The warning message could be issued through light and/or sound. In the current embodiment, the RF signal extender 30 compiles the warning message into an RF signal, and sends it out through the RF transceiver module. Since the first electronic device 10 and the second electronic device 20 are located in the third RF signal coverage area, at least one of the first electronic device 10 and the second electronic device 20 could receive the RF signal carrying the data of the warning message for further inspection. For instance, the warning message could be transmitted to the portable device 40. In other words, if someone mistakenly installs a first electronic device or a second electronic device of another wireless control system into the current wireless control system, the RF signal extender 30 would not transfer the RF signals of the incorrectly installed first electronic device or second electronic device, and would further issue a warning message to indicate a misuse situation is happening.

In this way, unconditional RF signal transmissions could be avoided, whereby to prevent interferences of RF signals in the wireless control system. A method of extending RF signals of another embodiment is illustrated below.

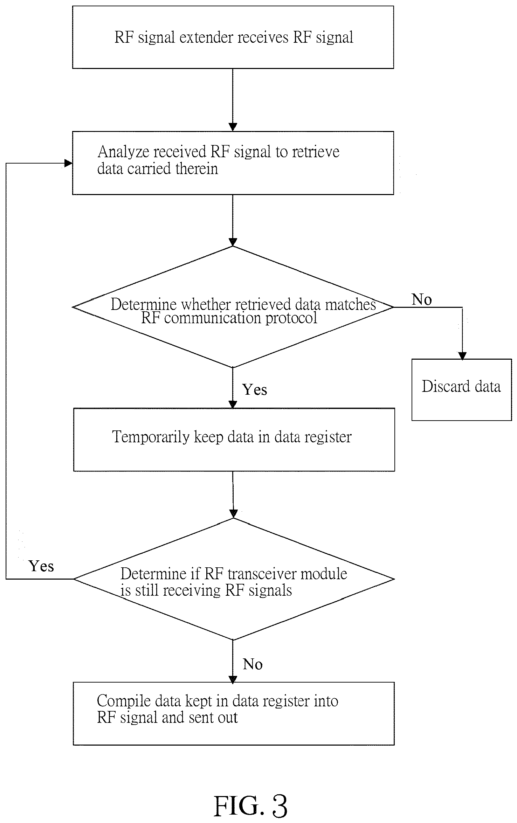

The method of extending RF signals of the second embodiment of the present invention is shown in FIG. 3, which is based on the first embodiment. To determine whether the piece of data matches the RF communication protocol of the wireless control system, the RF signal extender 30 performs the following steps:

Temporarily keep the piece of data in a data register (not shown), wherein the data register is a FIFO (First In First Out) register in the current embodiment.

Check if the RF transceiver module is still receiving RF signals.

If no, compile the piece of data kept in the data register into another RF signal and then send it out through the RF transceiver module;

If yes, analyze the received RF signal to retrieve the piece of data carried in the received RF signal; go back to the previous step when the retrieved piece of data is considered to follow the RF communication protocol, so that the piece of data can be temporarily kept in the data register; wait until the RF transceiver module no longer receives RF signals, and send out the piece of data kept in the data register in a first-in-first-out order.

With the aforementioned design, the method of extending RF signals in a wireless control system presented in the present invention could not only expand the total RF signal coverage area of the wireless control system, but also ensure that the RF signals transmitted by the RF signal extender would follow the RF communication protocol of the wireless control system, whereby to reduce the interferences caused by RF signals from other wireless control systems.

It must be pointed out that the embodiments described above are only some preferred embodiments of the present invention. The scope of the invention is defined by the appended claims.

## Claims

1. A method of extending RF signals in a wireless control system, wherein the wireless control system includes a first electronic device (10), a second electronic device (20), and an RF signal extender (30); the first electronic device (10) has a first RF signal coverage area, and the second electronic device (20) has a second RF signal coverage area; the second electronic device (20) is located out of the first RF signal coverage area; the first RF signal coverage area partially overlaps the second RF signal coverage area, and the RF signal extender (30) is located in an overlapping area between the first RF signal coverage area and the second RF signal coverage area; the RF signal extender (30) has a third RF signal coverage area; the first electronic device (10) and the second electronic device (20) are both located in the third RF signal coverage area; the method of extending RF signals is applied to the RF signal extender (30), comprising the steps of:
A. receiving an RF signal with the RF signal extender (30);
B. analyzing the received RF signal with the RF signal extender (30) to retrieve a piece of data carried in the received RF signal; and
C. determining whether the retrieved piece of data follows an RF communication protocol of the wireless control system with the RF signal extender (30); if so, compiling the retrieved piece of data into another RF signal, and transmitting the another RF signal with the RF signal extender (30),
**characterized in that**
step C further comprises the following steps to compile the retrieved piece of data into the another RF signal:
C1. keeping the retrieved piece of data in a data register temporarily with the RF signal extender (30); and
C2. checking if there are more RF signals still being received with the RF signal extender (30); if no, compiling the retrieved piece of data kept in the data register into the another RF signal with the RF signal extender (30) and transmitting the another RF signal with the RF signal extender (30); if yes, analyzing every one of the more received RF signals to retrieve a piece of data carried therein with the RF signal extender (30); and when the retrieved piece of data is considered to follow the RF communication protocol, going back to the step C1.

2. The method of claim 1, wherein, in step C, a header and a trailer of the retrieved piece of data are checked by the RF signal extender (30) to see if the header and the trailer match a predetermined header and a predetermined trailer defined in the RF communication protocol; if yes, the retrieved piece of data is compiled into the another RF signal and sent out by the RF signal extender (30); if no, the retrieved piece of data is discarded by the RF signal extender (30).

3. The method of claim 2, further comprising the step of counting times that the retrieved piece of data is discarded in a period of time, and generating a warning message with the RF signal extender (30) when the times that the retrieved piece of data is discarded reach a predetermined count.

4. The method of claim 3, further comprising the step of transmitting the warning message as an RF signal to at least one of the first electronic device (10) and the second electronic device (20) with the RF signal extender (30).

5. The method of claim 1, wherein, in step C, a length of the retrieved piece of data is checked by the RF signal extender (30) to see if the length matches a predetermined length defined in the RF communication protocol; if yes, the retrieved piece of data is compiled into the another RF signal and sent out by the RF signal extender (30); if not, the retrieved piece of data is discarded by the RF signal extender (30).

6. The method of claim 5, further comprising the step of counting times that the retrieved piece of data is discarded in a period of time and generating a warning message with the RF signal extender (30) when the times that the retrieved piece of data is discarded reach a predetermined count.

7. The method of claim 6, further comprising the step of transmitting the warning message as an RF signal to at least one of the first electronic device (10) and the second electronic device (20) with the RF signal extender (30).

## Patentansprüche

1. Verfahren zum Verlängern von RF-Signalen in einem drahtlosen Steuersystem, wobei das drahtlose Steuersystem eine erste elektronische Vorrichtung (10), eine zweite elektronische Vorrichtung (20) und eine RF-Signalverlängerungsvorrichtung (30) aufweist, die erste elektronische Vorrichtung (10) einen ersten RF-Signalabdeckungsbereich hat und die zweite elektronische Vorrichtung (20) einen zweiten RF-Signalabdeckungsbereich hat, die zweite elektronische Vorrichtung (20) sich außerhalb von dem ersten RF-Signalabdeckungsbereich befindet, der erste RF-Signalabdeckungsbereich den zweiten RF-Signalabdeckungsbereich teilweise überlappt und die RF-Signalverlängerungsvorrichtung (30) sich in einem Überlappungsbereich zwischen dem ersten RF-Signalabdeckungsbereich und dem zweiten RF-Signalabdeckungsbereich befindet, die RF-Signalverlängerungsvorrichtung (30) einen dritten RF-Signalabdeckungsbereich hat, sowohl die erste elektronische Vorrichtung (10) als auch die zweite elektronische Vorrichtung (20) sich in dem dritten RF-Signalabdeckungsbereich befinden, und das Verfahren zum Verlängern von RF-Signalen auf die RF-Signalverlängerungsvorrichtung (30) angewendet wird, wobei es die folgenden Schritte aufweist:
A. Empfangen eines RF-Signals mittels der RF-Signalverlängerungsvorrichtung (30),
B. Analysieren des empfangenen RF-Signals mittels der RF-Signalverlängerungsvorrichtung (30), um ein Datenstück abzurufen, welches in dem empfangenen RF-Signal enthalten ist, und
C. Ermitteln, mittels der RF-Signalverlängerungsvorrichtung (30), ob das abgerufene Datenstück einem RF-Kommunikationsprotokoll des drahtlosen Steuersystems folgt,
wobei, wenn dies der Fall ist: Kompilieren des abgerufenen Datenstücks in ein anderes RF-Signal und Übertragen des anderen RF-Signals mit der RF-Signalverlängerungsvorrichtung (30),
**dadurch gekennzeichnet, dass**
Schritt C ferner die folgenden Schritte aufweist, um das abgerufene Datenstück in ein anderes RF-Signal zu kompilieren:
C1. temporäres Behalten des abgerufenen Datenstücks in einem Datenregister mit der RF-Signalverlängerungsvorrichtung (30), und
C2. Prüfen, ob es weitere RF-Signale gibt, welche noch empfangen werden mit der RF-Signalverlängerungsvorrichtung (30),
wenn nein: Kompilieren des in dem Datenregister behalten abgerufenen Datenstücks in das andere RF-Signal mit der RF-Signalverlängerungsvorrichtung (30) und Übertragen des anderen RF-Signals mit der RF-Signalverlängerungsvorrichtung (30),
wenn ja: Analysieren jedes von den mehreren empfangenen RF-Signalen, um ein darin mitgeführtes Datenstück mit der RF-Signalverlängerungsvorrichtung (30) abzurufen, und wenn das abgerufene Datenstück angesehen wird, dem RF-Kommunikationsprotokoll zu folgen, Zurückgehen zu dem Schritt C1.

2. Verfahren gemäß Anspruch 1, wobei in Schritt C ein Header und ein Trailer des abgerufenen Datenstücks mittels der RF-Signalverlängerungsvorrichtung (30) geprüft werden, um zu sehen, ob der Header und der Trailer mit einem vorbestimmten Header und einem vorbestimmten Trailer übereinstimmen, welche in dem RF-Kommunikationsprotokoll definiert sind,
wenn ja, wird das abgerufene Datenstück in das andere RF-Signal kompiliert und ausgesendet mittels der RF-Signalverlängerungsvorrichtung (30);
wenn nein, wird das abgerufene Datenstück mittels der RF-Signalverlängerungsvorrichtung (30) verworfen.

3. Verfahren gemäß Anspruch 2, ferner aufweisend:
den Schritt des Zählens von Malen, in welchen das abgerufene Datenstück in einem Zeitraum verworfen wird, und des Generierens einer Warnmeldung mit der RF-Signalverlängerungsvorrichtung (30), wenn die Male, in welchen das abgerufene Datenstück verworfen wird, eine vorbestimmte Anzahl erreicht haben.

4. Verfahren gemäß Anspruch 3, ferner aufweisend:
den Schritt des Übertragens der Warnmeldung als ein RF-Signal an mindestens eine von der ersten elektronischen Vorrichtung (10) und der zweiten elektronischen Vorrichtung (20) mit der RF-Signalverlängerungsvorrichtung (30).

5. Verfahren gemäß Anspruch 1, wobei in Schritt C eine Länge des abgerufenen Datenstücks mittels der RF-Signalverlängerungsvorrichtung (30) geprüft wird, um zu sehen, ob die Länge mit einer vorbestimmten Länge übereinstimmt, welche in dem RF-Kommunikationsprotokoll definiert ist,
wenn ja, wird das abgerufene Datenstück mittels der RF-Signalverlängerungsvorrichtung (30) in das andere RF-Signal kompiliert und ausgesendet,
wenn nein, wird das abgerufene Datenstück mittels der RF-Signalverlängerungsvorrichtung (30) verworfen.

6. Verfahren gemäß Anspruch 5, ferner aufweisend:
den Schritt des Zählens von Malen, in welchen das abgerufene Datenstück in einem Zeitraum verworfen wird, und des Generierens einer Warnmeldung mit der RF-Signalverlängerungsvorrichtung (30), wenn die Male, in welchen das abgerufene Datenstück verworfen wird, eine vorbestimmte Anzahl erreichen.

7. Verfahren gemäß Anspruch 6, ferner aufweisend:
den Schritt des Übertragens der Warnmeldung als ein RF-Signal an mindestens eine von der ersten elektronischen Vorrichtung (10) und der zweiten elektronischen Vorrichtung (20) mit der RF-Signalverlängerungsvorrichtung (30).

## Revendications

1. Procédé d'amplification de signaux RF dans un système de commande sans fil, dans lequel le système de commande sans fil comprend un premier dispositif électronique (10), un deuxième dispositif électronique (20) et un amplificateur de signal RF (30) ; le premier dispositif électronique (10) présente une première zone de couverture du signal RF, et le deuxième dispositif électronique (20) présente une deuxième zone de couverture du signal RF ; le deuxième dispositif électronique (20) est situé hors de la première zone de couverture de signal RF ; la première zone de couverture de signal RF chevauche partiellement la deuxième zone de couverture de signal RF, et l'amplificateur de signal RF (30) est situé dans une zone de recouvrement entre la première zone de couverture de signal RF et la deuxième zone de couverture de signal RF ; l'amplificateur de signal RF (30) présente une troisième zone de couverture de signal ; le premier dispositif électronique (10) et le deuxième dispositif électronique (20) sont tous deux situés dans la troisième zone de couverture de signal RF ; le procédé d'amplification de signaux RF est appliqué à l'amplificateur de signal RF (30), comprenant les étapes consistant à :
A. recevoir un signal RF avec l'amplificateur de signal RF (30) ;
B. analyser le signal RF reçu avec l'amplificateur de signal RF (30) pour récupérer un morceau de donnée transporté dans le signal RF reçu ; et
C. déterminer si le morceau de donnée récupéré suit un protocole de communication RF du système de commande sans fil avec l'amplificateur de signal RF (30) ; dans ce cas, compiler le morceau de donnée récupéré dans un autre signal RF, et transmettre l'autre signal RF avec l'amplificateur de signal RF (30),
**caractérisé en ce que**
l'étape C comprend en outre les étapes suivantes pour compiler le morceau de donnée récupéré dans l'autre signal RF :
C1. conserver temporairement le morceau de donnée récupéré dans un registre de données avec l'amplificateur de signal RF (30) ; et
C2. vérifier si plusieurs signaux RF continuent d'être reçus avec l'amplificateur de signal RF (30) ; dans le cas contraire, compiler le morceau de donnée récupéré conservé dans le registre de données dans l'autre signal RF avec l'amplificateur de signal RF (30) et transmettre l'autre signal RF avec l'amplificateur de signal RF (30) ; dans l'affirmative, analyser chacun des un ou plusieurs signaux RF reçus pour récupérer un morceau de donnée transporté à l'intérieur avec l'amplificateur de signal RF (30) ; et lorsque le morceau de donnée récupéré est considéré comme suivant le protocole de communication RF, revenir à l'étape C1.

2. Procédé selon la revendication 1, dans lequel, dans l'étape C, une en-tête et une fin du morceau de donnée récupéré sont vérifiées par l'amplificateur de signal RF (30) pour voir si l'en-tête et la fin correspondent à une en-tête et une fin prédéterminées définies dans le protocole de communication RF ; dans l'affirmative, le morceau de donnée récupéré est compilé dans l'autre signal RF et envoyé par l'amplificateur de signal RF (30) ; dans le cas contraire, le morceau de donnée récupéré est rejeté par l'amplificateur de signal RF (30).

3. Procédé selon la revendication 2, comprenant en outre l'étape consistant à compter les temps où le morceau de donnée récupéré est rejeté sur un laps de temps particulier, et à générer un message d'avertissement avec l'amplificateur de signal RF (30) quand les temps où le morceau de donnée récupéré est rejeté atteignent un décompte prédéterminé.

4. Procédé selon la revendication 3, comprenant en outre l'étape consistant à transmettre le message d'avertissement sous la forme d'un signal RF à au moins un du premier dispositif électronique (10) et du deuxième dispositif électronique (20) avec l'amplificateur de signal RF (30).

5. Procédé selon la revendication 1, dans lequel, dans l'étape C, une longueur du morceau de donnée récupéré est vérifiée par l'amplificateur de signal RF (30) pour voir si la longueur correspond à une longueur prédéterminée définie dans le protocole de communication RF ; dans l'affirmative, le morceau de donnée récupéré est compilé dans l'autre signal RF et envoyé par l'amplificateur de signal RF (30) ; dans le cas contraire, le morceau de donnée récupéré est rejeté par l'amplificateur de signal RF (30).

6. Procédé selon la revendication 5, comprenant en outre l'étape consistant à compter les temps où le morceau de donnée récupéré est rejeté sur un laps de temps particulier, et à générer un message d'avertissement avec l'amplificateur de signal RF (30) quand les temps où le morceau de donnée récupéré est rejeté atteignent un décompte prédéterminé.

7. Procédé selon la revendication 6, comprenant en outre l'étape consistant à transmettre le message d'avertissement sous la forme d'un signal RF à au moins un du premier dispositif électronique (10) et du deuxième dispositif électronique (20) avec l'amplificateur de signal RF (30).
